Europäisches Patentamt

European Patent Office

Office européen des brevets

(11) Veröffentlichungsnummer: **0 419 418 A2**

# (12) EUROPÄISCHE PATENTANMELDUNG

(21) Anmeldenummer: 90810709.7

(22) Anmeldetag: 18.09.90

(51) Int. Cl.⁵: **C02F 1/76**

(30) Priorität: 20.09.89 DE 3931390

(43) Veröffentlichungstag der Anmeldung:
27.03.91 Patentblatt 91/13

(84) Benannte Vertragsstaaten:
**AT CH ES FR GB IT LI NL SE**

(71) Anmelder: **Wilberg, Charlotte G. Dr.med.**
**Stuhmer Allee 1**
**W-1000 Berlin 1(DE)**

(72) Erfinder: **Wilberg, Charlotte G. Dr.med.**
**Stuhmer Allee 1**
**W-1000 Berlin 1(DE)**

(74) Vertreter: **Feldmann, Clarence Paul et al**
**c/o Patentanwaltsbüro FELDMANN AG**
**Postfach Kanalstrasse 17**
**CH-8152 Glattbrugg(CH)**

(54) **Zusatzmittel zur Bekämpfung von Bakterienbefall in Schwimmbädern, Aquarien und stillen Fischteichen.**

(57) Zur Bekämpfung des Bakterienbefalls in Schwimmbecken, Aquarien und stillen Fischteichen wird vorgeschlagen, dem Wasser eine Lösung aus einem Teil Jod und zwei Teilen Jodkalium bei zugeben. Die Konzentration sollte im Schwimmbecken nicht mehr als zehn Mililiter, in Aquarien weniger als fünf Mililiter pro Kubikmeter sein. Die Anwendung erfolgt vorteilhaft so, dass man die Lösung auf einen porösen Stein appliziert und diesen im Wasser des Schwimmbeckens oder Aquariums versenkt.
Bei der Verwendung wurden keine Reizungen der Schleimhäute oder Augen der Benutzer festgestellt.

EP 0 419 418 A2

## ZUSATZMITTEL FÜR SCHWIMMBECHEN, AQUARIEN UND STILLE FISCHTEICHE

Die Erfindung betrifft ein Zusatzmittel zur Bekämpfung von Bakterienbefall in Schwimmbecken, Aquarien und stillen Fischteichen mit einer an sich bekannten Lösung aus einem Teil Jod und zwei Teilen Jodkalium.

Aus der EP 0 075 240 A1 und der CH-PS 506 295 ist eine Lösung aus einem Teil Jod und zwei Teilen Jodkalium bekannt, die als Desinfektionsmittel verwendet wird.

Aus der US-PS 32 88 708 und US-PS 33 26 147 sind Desinfektionsmittel bekannt, bei der der Lösung aus Jod und Jodid ein Oxydationsmittel, wie Perjodad oder Ozon, beigegeben wird, um damit Abwasser und Schwimmbecken zu desinfiszieren.

Es hat sich nun gezeigt, dass bei der Eingabe derartiger Lösungen in das Wasser eines Schwimmbeckens, eines Aquariums oder eines Fischteiches die Desinfektionswirkung schon nach kurzer Zeit verklungen ist oder zu erheblichen Geruchsbelästigungen und teilweise zur Verfärbung des Wassers geführt hat. Bei dieser direkten Beigabe der Lösung zum Wasser tritt keine ausreichende Vermischung ein, und ein grosser Teil der Lösung schwimmt auf der Wasseroberfläche und verdunstet sehr schnell.

Es ist Aufgabe der Erfindung, ein Zusatzmittel der eingangs erwähnten Art zu schaffen, das dem Wasser beigegeben für eine Langzeitwirkung der Desinfektion und zu einer ausgezeichneten Vermischung der Lösung mit dem Wasser führt.

Diese Aufgabe wird nach der Erfindung dadurch gelöst, dass man die Lösung auf einen porösen Stein appliziert und diesen in das Wasser des Schwimmbeckens, des Aquariums oder Fischteiches legt.

Die Lösung wird mit dem Stein in das Wasser eingebracht und verbleibt daher nicht an der Wasseroberfläche. Aus dem porösen Stein treten feine Tröpfchen der Lösung in das Wasser aus und vermischen sich mit diesem in wesentlich günstigerer Weise. Da die Vermischung im Bereich des Wassergrundes auftritt, werden auch Geruchsbelästigung und Verfärbungen des Wassers weitestgehend vermieden.

Nach einer bevorzugten Ausgestaltung ist vorgesehen, dass man den porösen Stein im Bereich nahe des Ansaugens einer Umwälzpumpe plaziert.

Die Wirkung kann dadurch noch verbessert werden, dass der Lösung eine kalklösende Säure beigesetzt ist.

Für die Konzentration ist nach einer Ausgestaltung vorgesehen, dass man die Lösung dem Wasser eines Schwimmbeckens mit einer Konzentration von maximal 1,0 ml pro Kubikmeter Wasser beigibt, während andererseits vergesehen ist, dass man die Lösung dem Wasser eines Aquariums mit einer Konzentration von maximal 0,5 ml pro Kubikmeter Wasser beigibt.

Obwohl Jod-Jodkaliumlösungen seit vielen Jahren bekannt sind, und deren desinfiszierende Wirkung in der Medizin allgemein genutzt wird, ist die Anwendung in der erfindungsgemässen Art als Zusatzmittel in Schwimmbecken und Aquarien unbekannt. Der Grund mag darin gesehen werden, dass die Beimischung zum Wasser problematisch ist.

Eine zu hohe Konzentration ergibt sogleich eine unerwünschte Verfärbung des Wassers und hat eine schnelle Verdunstung zur Folge. Versuche haben gezeigt, dass eine gute Wirkung erzeugt werden kann mit einer Beimischung von weniger als einem ml der Lösung pro Kubikmeter Wasser. Die genaue Konzentration ist kaum ermittelbar und hängt weitgehend vom gewählten porösen Stein ab, auf den die Lösung aufgebracht wird, sowie von der Umwälzung des Wassers und damit des Auswascheffektes der Lösung aus dem Stein.

Besonders erstaunlich ist, dass diese Art der Wasser-Desinfektion auch in den Aquarien ohne Beeinträchtigung der Flora und Fauna möglich ist.

Ferner wurde festgestellt, dass der Bakterienbefall stark gebremst werden kann, wenn man der Lösung eine handelsübliche Flüssigseife beimischt.

Zur Reinigung der Aquarien wird dabei vorzugsweise eine biologisch abbaubare Flüssigseife verwendet. Die Konzentration der Lösung sollte je nach Anwendung ermittelt werden, doch generell darf sie zehn Volumen-Prozente der Flüssigseife nicht übersteigen.

Ein weiterer Vorteil ist hier, dass ein Bakterienbefall nach der Reinigung erheblich verzögert wird.

Bei Becken mit starkem Algenwuchs oder Kalkablagerungen ist es sinnvoll, der Lösung zusätzlich noch eine kalklösende Säure beizusetzen. Je nach Wunsch lässt sich dabei der pH-Wert zwischen 1,5 - 4 pH einregeln.

Bei der Verwendung als Zusatzmittel in Schwimmbecken wurden auch bei relativ hohen Konzentrationen keine Hautirritationen oder Reizungen der Schleimhäute festgestellt. Hingegen ist die Dosierung in Aquarien schwieriger und sollte in keinem Fall über fünf ml pro Kubikmeter Wasser liegen. Vorteilhaft ist es hier, die auf einem porösen Sein applizierte Lösung in der Nähe des Ansaugens der Umwälzpumpe in das Aquarium einzubringen, um so eine gleichmässige Verteilung sicherzustellen und jede örtliche Ueberkonzentration zu vermeiden. In vielen Fällen dürfte es jedoch zu einer genügenden natürlichen Verteilung der aus dem Stein austretenden Lösung kommen, wenn keine Umwälzpumpe vorhanden ist.

**Ansprüche**

1) Zusatzmittel zur Bekämpfung von Bakterienbefall in Schwimmbecken, Aquarien und stillen Fischteichen mit einer an sich bekannten Lösung aus einem Teil Jod und zwei Teilen Jodkalium, dadurch gekennzeichnet, dass man die Lösung auf einen porösen Stein appliziert und diesen in das Wasser des Schwimmbeckens, des Aquarium oder Fischteiches legt.

2) Zusatzmittel nach Anspruch 1, dadurch gekennzeichnet, dass man den porösen Stein im Bereich nahe des Ansaugens einer Umwälzpumpe plaziert.

3) Zusatzmittel nach einem der Ansprüche 1 oder 2, dadurch gekennzeichnet, dass der Lösung eine kalklösende Säure bei gesetzt ist.

4) Zusatzmittel nach Anspruch 1, dadurch gekennzeichnet, dass man die Lösung dem Wasser eines Schwimmbeckens mit einer Konzentration von mamimal 1,0 ml pro Kubikmeter Wasser beigibt.

5) Zusatzmittel nach Anspruch 1, dadurch gekennzeichnet, dass man die Lösung dem Wasser eines Aquariums mit einer Konzentration von maximal 0,5 ml pro Kubikmeter Wasser beigibt.